(19) Europäisches Patentamt
European Patent Office
Office européen des brevets

(11) **EP 1 586 669 B1**

(12) **EUROPEAN PATENT SPECIFICATION**

(45) Date of publication and mention
of the grant of the patent:
**21.05.2014  Bulletin 2014/21**

(51) Int Cl.:
***C22C 19/05*** (2006.01)

(21) Application number: **05252189.5**

(22) Date of filing: **07.04.2005**

(54) **Oxidation resistant superalloy and article**

Oxidationsbeständige Superlegierung und Gegenstand

Superalliage résistant à l'oxydation et objet

(84) Designated Contracting States:
**AT BE BG CH CY CZ DE DK EE ES FI FR GB GR
HU IE IS IT LI LT LU MC NL PL PT RO SE SI SK TR**

(30) Priority: **07.04.2004  US 560287 P**

(43) Date of publication of application:
**19.10.2005  Bulletin 2005/42**

(73) Proprietor: **United Technologies Corporation
Hartford, CT 06101 (US)**

(72) Inventor: **Cetel, Alan D.
West Hartford, CT 06117 (US)**

(74) Representative: **Hall, Matthew Benjamin
Dehns
St. Bride's House
10 Salisbury Square
London EC4Y 8JD (GB)**

(56) References cited:
**EP-A- 0 208 645     EP-A- 0 962 542
EP-A- 1 111 192     EP-A- 1 201 778
US-A- 6 074 602     US-B1- 6 565 680**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

As gas turbine engines have evolved, the requirements placed on the superalloys which form the operating components of such turbines have increased. Early gas turbine engines used polycrystalline cast turbine airfoils without protective coatings. Over time, improved mechanical properties were obtained by casting superalloy articles in a columnar grain form comprising elongated grains whose direction of elongation is at least generally in the direction of the major stress axis. This technique reduces the number of transverse grain boundaries and improves the mechanical properties of the components. Also, starting at about this time it became common to use protective coatings to protect the components from oxidation and corrosion.

The next step in the evolution of gas turbine components was the development of single crystals. Single crystals are free from internal grain boundaries and offer an increased level of mechanical properties. Single crystal alloys were developed for use at higher temperatures, and in many cases utilized protective coatings. Single crystal alloys and articles are described, for example, in commonly owned U.S. Pat. Nos. 4,209,348, 4,459,160 and 4,643,782. Depending upon the particular operating conditions for parts comprising these alloys, such articles provide an acceptable level of oxidation resistance.

In one effort to improve oxidation resistance and lower weight, commonly owned EP 1201778 entitled "Low Density Oxidation Resistant Superalloy Materials Capable of Thermal Barrier Retention Without a Bond Coat", shows an alloy suitable for use with a thermally insulating ceramic, and with or without a bond coat. The '778 publication application discloses alloys including small but controlled additions of hafnium and yttrium to nickel based superalloys. These small additions result in large improvements to certain properties including oxidation resistance. However, the addition of yttrium to alloys cast as hollow articles, e.g., cooled turbine components, typically requires the use of alumina core materials as part of the investment casting process, which core materials can be costly to fabricate and/or difficult to remove from the as-cast articles. Moreover, the use of both hafnium and yttrium lowers incipient melting temperature of the alloy, making it more difficult to fully solution heat treat the alloy, which reduces the creep strength of the alloy.

It would be desirable to provide a directionally solidified alloy, such as a single crystal alloy, with improved properties such as improved oxidation resistance, while maintaining other relevant properties such as creep, stress corrosion resistance, low cycle fatigue resistance and including castability at a comparable level.

The present invention comprises a nickel base superalloy, which is suitable for use in columnar grain and single crystal articles. The superalloy exhibits increased uncoated and coated oxidation resistance to other alloys having similar composition, while maintaining comparable other mechanical properties. A combination of this nickel base superalloy and a thermal barrier coating system includes a metallic bond coat capable of forming a durable adherent alumina scale formed on the substrate and a ceramic thermal barrier layer applied to the alumina scale.

The invention has particular utility in gas turbine applications, particularly rotating parts such as gas turbine blades. Such blades generally comprise an airfoil portion and a root or attachment portion.

Preferred embodiments of the present invention will now be described by way of example only and with reference to the accompanying drawings in which:

FIG. 1 shows the relative coated and uncoated oxidation life of the inventive alloy.
FIGS. 2 and 3 show the creep rupture characteristics of the inventive alloy.
FIG. 4 shows the LCF characteristics of the inventive alloy.

Advanced superalloy compositions have been developed which exhibit improved strength and high temperature capabilities. The present invention relates to hafnium, without intentional addition of yttrium, to certain nickel based superalloys yields significant improvements in oxidation resistance (comparable to that achieved with adding hafnium and yttrium), while maintaining castability and other relevant properties.

Table I -

| Alloy Composition Range in wt. % | | | | |
|---|---|---|---|---|
| | **EP Publ. No.** EP1201778 | U.S. Pat. No. 4,209,348 | Invention A | Invention B |
| Cr | **6-13** | **8 - 12** | 7.5 - 12.5 | 9-11 |
| Al | **4.5-7** | **4.5 - 5.5** | 4.5-5.5 | 4.75-5.25 |
| Ti | **.5-2.5** | **1 - 2** | up to 2 | 1-2 |
| W | **3-12** | **3 - 5** | 3.5-4.5 | 3.5-4.5 |

(continued)

| Alloy Composition Range in wt. % | | | | |
|---|---|---|---|---|
| | **EP Publ. No.** EP1201778 | **U.S. Pat. No.** 4,209,348 | Invention A | Invention B |
| Ta | **0-14** | **10-14** | 11.5-12.5 | 11.5-12.5 |
| Co | **0-15** | **3-7** | 3-16 | 4-6 |
| Hf | **0.05-1.5** | **none** | .2-.5 | .25-.45 |
| Y | **.003-.040** | **none** | no intentional addition, <.003 | <.0005 |
| Ni | **Bal** | **Bal** | Bal | Bal |
| Zr | **0-0.15** | **<50 ppm** | up to 0.05 | up to 0.05 |
| Nb | **0-2** | **none** | up to 8.5 total | up to 8.5 selected from the group comprising up to 5 Mo, up to 3 Re, up to 1.5 V, and up to 3 Nb |
| Mo | **0-4** | **none** | | |
| Re | **0-1** | **none** | | |
| V | **0-2** | **none** | | |
| Zr | **0-0.15** | **<50 ppm** | up to 0.05 | up to 0.05 |
| C | **0-0.1** | **<50 ppm** | up to 0.05 | up to 0.05 |
| B | **0-0.05** | **<50 ppm** | up to 0.005 | up to 0.005 |

Table I shows preferred ranges for alloys, the first of which is discussed in more detail in co-pending and commonly owned EP Publication No. EP1 201 778 (corresponding to the '945 application), the second of which is discussed in more detail in U.S. Pat. No. 4,209,348 and the last two of which are variations of the alloy of the present invention. These ranges include compositions suited for producing equiaxed grain, columnar grain and single crystal articles. These preferred ranges are optimized for single crystal applications. For single crystal applications, it is preferred that C be less than about 0.05 %, B be less than about 0.005 % and Zr be less than about 0.1% Preferably the ranges in Table III are subject to the constraint that a (Al + Ti + .2 Ta) value is from about 6.5% to about 11.5% and more preferably from about 7.0% to about 10.5%; while the value for (W + .8 Ta) is from about 9.5% to about 17.5% and more preferably from about 10.5% to about 16.5%. in the case of the inventive alloys, it is preferred that there be no yttrium, and in any case less than 100, more preferably less than 50 ppm.

An aspect of the present invention is the discovery that adding small, carefully controlled amounts of hafnium, without adding yttrium, to these alloys substantially improves their coated and uncoated oxidation resistance. Moreover, avoiding the use of intentional addition of yttrium enables the use of conventional, non-alumina core materials for the production, e.g., by investment casting, of hollow articles. In addition, the removal of yttrium from the alloy facilitates the solution heat treatment of cast articles to the extent that an absence of yttrium raises the incipient melting temperature of the alloy.

U.S. Pat. No. 4,719,080 defines broad ranges for nickel base superalloys and describes a quantity called the P parameter, which defines a desired relationship between various elements to produce an optimum combination of properties with a focus on high creep strength. The P parameter in U.S. Pat. No. 4,719,080 is repeated below:

$$P = -200\,Cr + 80\,Mo^2 - 250\,Ti^2 - 50\,(Ti \times Ta) + 15\,Cb + 200\,W -$$

$$14\,W^2 + 30\,Ta - 1.5\,Ta^2 + 2.5\,Co + 1200\,Al - 100\,Al^2 + 100\,Re +$$

$$1000\,Hf - 2000\,Hf^2 + 700\,Hf^3 - 2000\,V - 500\,C - 15000\,B - 500\,Zr.$$

The minimum P parameter disclosed in U.S. Pat. No. 4,719,080 for an alloy having high strength capability is 3360 and the maximum P parameter disclosed in that patent is 4700. Thus the compositions which are the focus of the present invention are distinguishable from those in U.S. Pat. Nos. 4,209,348 and 4,719,080 among other ways by the P parameter, alloying elements and certain properties, and from the '945 application by the absence of yttrium while maintaining comparable oxidation resistance and creep capability. Broadly to achieve the desired combination properties for the inventive alloy, the P parameter should be less than about 2500, or more preferably less than about 1800.

While the P parameter is a good indicator/predictor of superalloy creep-rupture properties, achieving a sufficiently high P parameter generally requires that heavy alloying elements be utilized. The resultant increase in alloy density leads to increased centrifugal forces during operation, without a concurrent improvement in LCF capability thereby effectively negating some of the improved creep properties which result from a high P parameter. As is the case in EP application 1 201 778, the invention alloys have lower levels of heavy alloying elements than current high strength alloys such as those set forth in the '080 patent, and therefore are less dense and develop lower centrifugal stresses than alloys with higher P parameters.

Samples of the inventive alloys were cast, and then heat treated. The heat treat included (i) heating to 1260 - 1300°C (2300 - 2370F) (in some cases 1280°C (2335F) and in others 1274°C (2325F)) for 0.5 hr min., cool to 1150°C (2100F) at a rate of 64°C/min (115F/min) or faster, cool to below 427°C (800F) at a rate equivalent to air cool or faster, (ii) heat to ~1080°C (~1975F) and hold for 4hr and cool, and then (iii) heat to 870°C (1600F) and hold for 32hr, then cool.

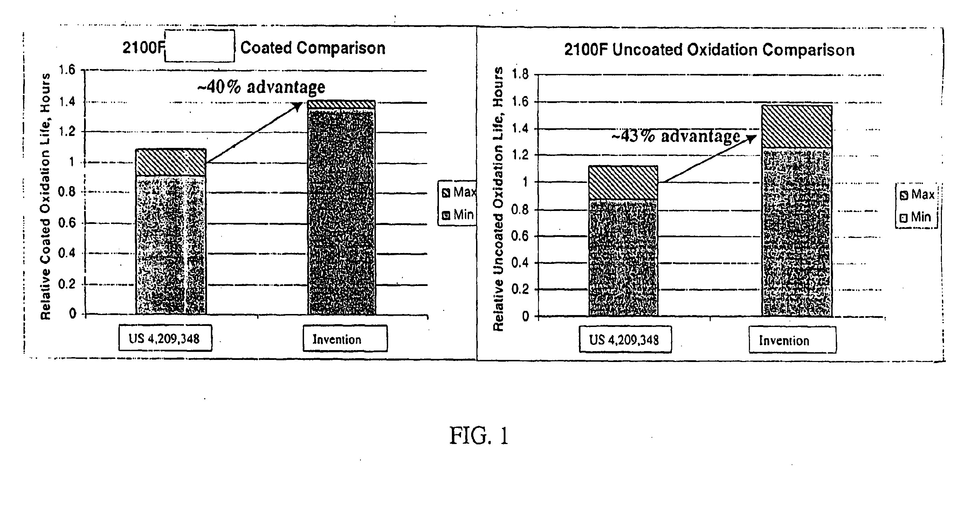

The present invention alloy displays substantial uncoated and coated oxidation resistance. Several sets of samples were tested in a burner rig cyclic oxidation test, four minutes in a 1150°C (2100F) flame followed by two minutes of forced air cooling. The samples were single crystal samples of material described in U.S. Patent 4,209,348, and single crystal samples of Preferred composition, Table I, above, with .35% Hf and no intentional addition of Y (less than 100 ppm) prepared as described above. With reference to FIG. 1, some samples were uncoated and some were coated with a corrosion and oxidation resistant coating material set forth in U.S. Pat. 4,585,481. In each case, the test results were 100% oxidation life for the samples of the '348 composition, and 140% relative oxidation life for the samples of the inventive composition (about a 40% improvement for coated samples and about a 43% improvement for uncoated samples). Thus, it can be seen that the oxidation life of the invention is significantly better than the '348 patent.

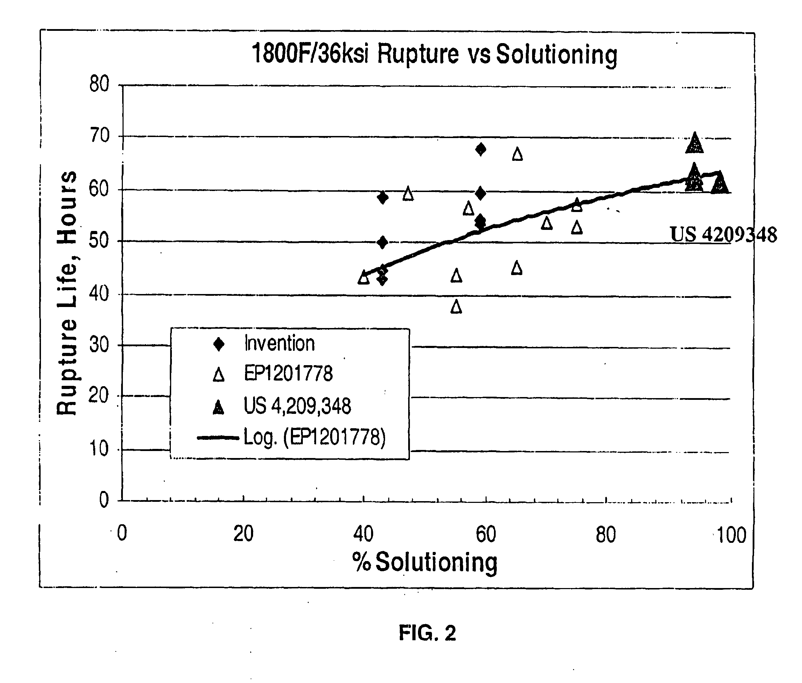

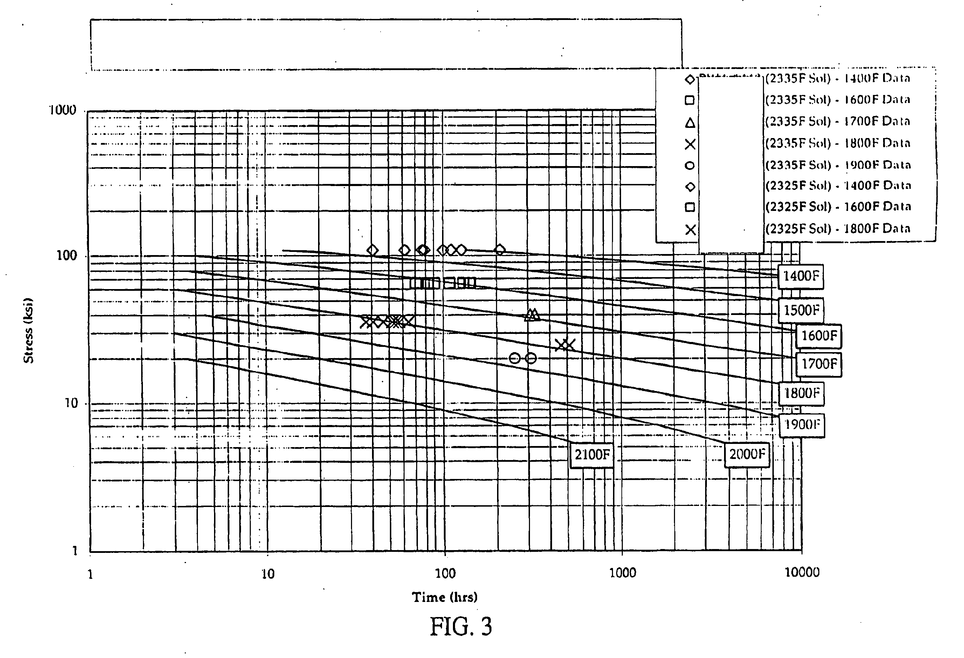

Those skilled in the art will recognize that other properties are relevant as well. For example, creep rupture behavior of the inventive alloy (nominal composition) were tested against those of EP application 1 201 778. During the test, a stress of 36 ksi was applied to test specimens at 980°C (1800 F), and the specimens were tested to failure. The results as illustrated in FIGS. 2 and 3 indicate that the inventive alloys are at least as creep rupture resistant, and benefit substantially from a slightly higher (~5.5°C (~10 F)) solution heat treatment cycle that is difficult to apply to a similar alloy which also included yttrium, e.g., the alloy of EP 1 201 778.

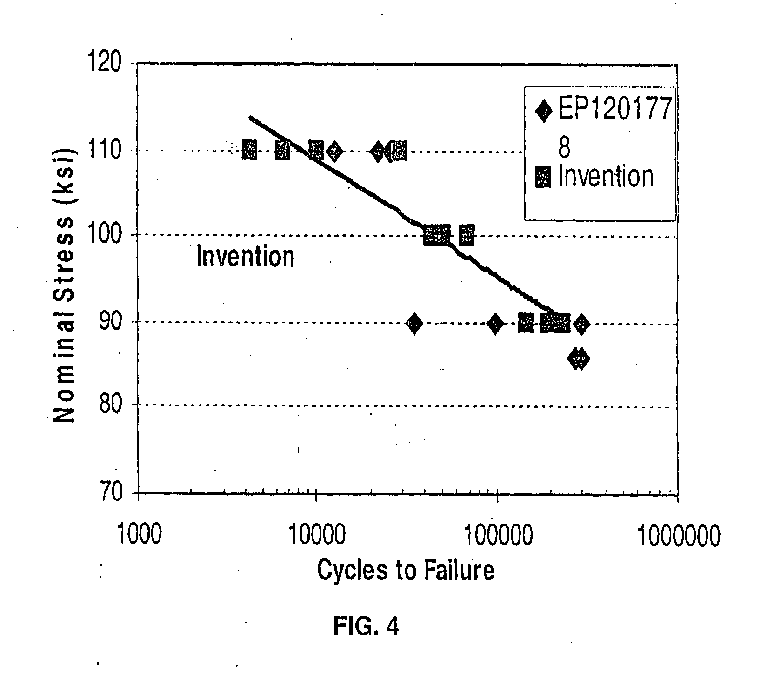

With respect to turbine blades in particular, the present invention alloy exhibits good LCF properties. FIG. 4 shows results of samples of the inventive alloy and those of the EP publication alloys, tested at 650°C (1200 F) and various stress levels. As shown in the FIG. the inventive alloy are comparable to those of the EP publication alloy. In addition, samples of the inventive alloy were tested for resistance to stress corrosion, relative to samples of the alloy of EP publication 1 201 778, and the samples showed similar resistance to stress corrosion cracking.

The inventive alloys may be coated with a material designed to form an adherent alumina coating, upon which a ceramic insulating layer may be applied. While the present invention is illustrated in the context of a turbine blade, the present invention is not limited to any particular component. The overlay coating is preferably an MCrAlY coating, where M is cobalt, nickel, iron or combinations of these materials, although other overlay coatings such as MCr and MCrAl coatings may also be employed. Exemplary coatings useful with the present invention include at least NiCrAlY, CoCrAlY, NiCoCrAlY and CoNiCrAlY coatings. The coating may also include other elements such as Hf and Si to provide further improvements in oxidation or corrosion resistance. A summary of exemplary overlay coating compositions is shown below.

| | Coating Composition (wt%) | | | | | | |
|---|---|---|---|---|---|---|---|
| Specified Range | Ni | Co | Cr | Al | Y | Si | Hf |
| Typical | Bal. | | 10-40 | 5-35 | 0-2 | 0-7 | 0-2 |
| Preferred | Bal. | | 20-40 | 5-20 | 0-1 | 0-2 | 0-1 |
| Exemplary | Bal. | | 25-40 | 5-15 | 0-0.8 | 0-0.5 | 0-0.4 |

The overlay coating may be applied by various processes known to those skilled in the art, such as by vapor deposition (including electron beam physical vapor deposition, sputtering, cathodic arc, etc.) or thermal spray (air plasma spray, low pressure or vacuum plasma spray, high velocity oxy-fuel, etc.).

In the alternative, the coating may comprise an aluminide coating of the type well know in the art. The aluminide may include one or more noble metals, and may be applied by any of a variety of known application processes, e.g., vapor deposition.

The alumina scale is preferably developed by thermal oxidation of the aluminum containing alloy prior to or during the application of the ceramic TBC layer. Oxidation is preferably performed in an atmosphere of low oxygen potential, as is know in the art.

The ceramic coatings which may be employed as thermal barrier coatings with the present invention comprise oxide ceramics and mixtures of oxide ceramics. Specifically, fully or partially stabilized zirconia may be used where additions of an oxide comprising $Y_2O_3$, $Yb_2O_3$, CaO, MgO, $Gd_2O_3$ or other rare earth oxide, or any other suitable oxide, and mixtures thereof may be employed as stabilizers. The TBC may be applied by EBPVD (electron beam physical vapor deposition) or by plasma or flame spray techniques. EBPVD application techniques are preferred for use on rotating parts. U.S. Pat. Nos. 4,321,311 and 5,262,245 incorporated herein by reference. As described in U.S. Pat. No. 4,321,311, ceramic coatings applied by EBPVD techniques possess a beneficial strain tolerant columnar microstructure that promotes good adhesion. A ceramic coating thickness of 3 - 10 mils is typical, although lesser or greater thicknesses are also possible.

The invention alloy is less dense than other relatively recently developed alloys with higher creep strength such as PWA 1484 described in U.S. Pat. No. 4,719,080. The reduced density of the invention alloy is particularly significant for rotating turbine components such as turbine blades. In some designs, turbine blades are limited by the LCF (low cycle fatigue life) properties in the root area where the blade is held in the turbine disk. Taking density in account, the invention alloy has significantly greater LCF strength capability than the alloy of U.S. Pat. No. 4,719,080, when tested in a notched LCF test at 650°C (1200F).

The reduced density of the invention alloy also reduces the stresses imposed on the supporting turbine disk. In engine operation, the blades exert a significant centrifugal force on the disk, an effect commonly known as blade pull.

While the present invention has been described above in some detail, numerous variations and substitutions may be made without departing from the scope of the following claims. Accordingly, it is to be understood that the invention has been described by way of illustration and not by limitation.

**Claims**

1.    A nickel base superalloy in weight percent consisting of:

   7.5 to 12.5 % Cr;
   4.5 to 5.5 % Al;
   up to 2 % Ti;
   3.5 to 4.5% W;
   11.5 to 12.5% Ta;
   3 to 16 % Co;
   0.2 to 0.5 % Hf
   less than 30 ppm of Y;
   less than 500 ppm of Zr;
   up to 0.05 % C;
   up to 0.005 % B;
   up to 8.5% of additional elements selected from the group consisting of Mo, Re, Nb and V; and
   balance Ni;
   wherein $P = -200$ Cr $+ 80$ $Mo^2 - 250$ $Ti^2 - 50$ (Ti x Ta) $+ 15$ Cb $+ 200$ W $- 14$ $W^2 + 30$ Ta $- 1.5$ Ta2 $+ .5$ Co $+ 1200$ Al $- 100$ $Al^2 + 100$ Re $+ 1000$ Hf-2000 $Hf^2 + 700$ $Hf^3 - 2000$ V $- 500$ C $- 15000$ B $- 500$ Zr, and wherein P is less than about 2500; and

   wherein the alloy has oxidation resistance at least about 25% greater than an alloy having a nominal composition of 10% Cr, 5% Co, 4% W, 1.5% Ti, 5% Al, balance Ni when tested in a burner ring cyclic oxidation test for four minutes in a 1150°C flame followed by two minutes of forced air cooling.

2.    An alloy as in claim 1, wherein the quantity Al + Ti + .2Ta (in wt %) ranges from 7 - 10%, and the quantity W + 8Ta (in wt.%) ranges from 12 - 18%.

3.    An alloy as in claim 1 or 2, wherein P is less than about 1800.

4.    An alloy as in any preceding claim, wherein the additional elements selected from the group consisting of Mo, Re, Nb and V is less than 1.

5.    A nickel base superalloy as in claim 1 or 2 in weight percent consisting of:

9 to 11 % Cr;
4.75 to 5.25 % Al;
1 to 2 % Ti;
3.5 to 4.5% W;
11.5 to 12.5% Ta;
4 to 6 % Co;
0.25 to 0.45 % Hf;
less than 30 ppm of Y;
less than 300 ppm of Zr;
up to 0.01 %C;
up to 0.005 % B;
up to 8.5% of additional elements selected from the group consisting of Mo, Re, Nb and V; and
balance Ni;
wherein P = -200 Cr + 80 Mo$^2$ - 250 Ti$^2$ - 50 (Ti x Ta) + 15 Cb + 200 W - 14 W$^2$ + 30 Ta - 1.5 Ta$^2$ + .5 Co + 1200 Al - 100 Al$^2$ + 100 Re + 1000 Hf - 2000 Hf$^2$ + 700 Hf$^3$ - 2000 V - 500 C - 15000 B - 500 Zr, and wherein P is less than about 2500; and

wherein the alloy has oxidation resistance at least about 25% greater than an alloy having a nominal composition of 10% Cr, 5% Co, 4% W, 1.5% Ti, 5% Al, balance Ni when tested in a burner ring cyclic oxidation test for four minutes in a 1150°C flame followed by two minutes of forced air cooling.

6. A superalloy article as in any preceding claim having a single crystal microstructure.

7. A superalloy article as in any of claims 1 to 5 having a columnar microstructure.

8. A single crystal superalloy gas turbine engine blade which comprises:

   a. a nickel base superalloy as in claim 1,
   b. an aluminum containing coating on the substrate, the coating being capable of forming a durable adherent alumina scale,
   c. a ceramic thermal barrier coating adhering to said alumina scale.

9. A gas turbine blade as in Claim 8 wherein said thermal barrier coating has a columnar microstructure.

10. A gas turbine blade as in claim 8 or 9, wherein the aluminum containing coating is an overlay coating.

11. A gas turbine blade as in claim 8, 9 or 10, wherein the aluminum containing coating is an aluminide.

**Patentansprüche**

1. Superlegierung auf Nickelbasis, die in Gewichtsprozent besteht aus:

   7,5 bis 12, 5% Cr;
   4,5 bis 5, 5% Al;
   bis zu 2% Ti;
   3,5 bis 4,5% W;
   11,5 bis 12,5% Ta;
   3 bis 16% Co;
   0,2 bis 0,5% Hf
   weniger als 30 ppm Y;
   weniger als 500 ppm Zr;
   bis zu 0,05% C;
   bis zu 0,005% B;
   bis zu 8,5% an zusätzlichen Elementen, die ausgewählt sind aus der Gruppe, die aus Mo, Re, Nb und V besteht; und
   Rest Ni;
   wobei P = - 200 Cr + 80 Mo$^2$ - 250 Ti$^2$ - 50(Ti x Ta) + 15 Cb + 200 W - 14 W$^2$ + 30 Ta - 1,5 Ta$^2$ + 0,5 Co + 1200

Al - 100 Al$^2$ + 100 Re + 1000 Hf - 2000 Hf$^2$ + 700 Hf$^3$ - 2000 V - 500 C - 15000 B - 500 Zr, und wobei P weniger als etwa 2500 ist; und

wobei die Legierung eine um mindestens etwa 25% größere Oxidationsbeständigkeit hat als eine Legierung mit einer nominellen Zusammensetzung von 10% Cr, 5% Co, 4% W, 1, 5% Ti, 5% Al, Rest Ni, wenn sie vier Minuten lang in einer Flamme von 1150° C, gefolgt von zwei Minuten Gebläseluftkühlung, in einem zyklischen Brenner-Rig-Oxidationstest getestet wird.

2. Legierung nach Anspruch 1, wobei die Menge an Al + Ti + 0,2 Ta (in Gew.-%) im Bereich von 7 - 10% liegt, und die Menge an W + 0,8 Ta (in Gew.-%) im Bereich von 12-18% liegt.

3. Legierung nach Anspruch 1 oder 2, wobei P geringer als etwa 1800 ist.

4. Legierung nach einem vorangehenden Anspruch, wobei die zusätzlichen Elemente, die ausgewählt sind aus der aus Mo, Re, Nb und V bestehenden Gruppe, weniger als 1 sind.

5. Superlegierung auf Nickelbasis nach Anspruch 1 oder 2, die in Gewichtsprozent besteht aus:

9 bis 11% Cr;
4,75 bis 5,25% Al;
1 bis 2% Ti;
3,5 bis 4,5% W;
11,5 bis 12,5% Ta;
4 bis 6% Co;
0,25 bis 0,45% Hf
weniger als 30 ppm Y;
weniger als 300 ppm Zr;
bis zu 0,01% C;
bis zu 0,005% B;
bis zu 8,5% an zusätzlichen Elementen, die ausgewählt sind aus der Gruppe, die aus Mo, Re, Nb und V besteht; und
Rest Ni;
wobei P = - 200 Cr + 80 Mo$^2$ - 250 Ti$^2$ - 50(Ti x Ta) + 15 Cb + 200 W - 14 W$^2$ + 30 Ta - 1,5 Ta$^2$ + 0,5 Co + 1200 Al - 100 Al$^2$ + 100 Re + 1000 Hf - 2000 Hf$^2$ + 700 Hf$^3$ 2000 V - 500 C - 15000 B - 500 Zr, und wobei P weniger als etwa 2500 ist; und

wobei die Legierung eine um mindestens etwa 25% größere Oxidationsbeständigkeit hat als eine Legierung mit einer nominellen Zusammensetzung von 10% Cr, 5% Co, 4% W, 1, 5% Ti, 5% Al, Rest Ni, wenn sie vier Minuten lang in einer Flamme von 1150° C, gefolgt von zwei Minuten Gebläseluftkühlung, in einem zyklischen Brenner-Rig-Oxidationstest getestet wird.

6. Superlegierungs-Gegenstand nach einem vorangehenden Anspruch mit einer Einkristall-Mikrostruktur.

7. Superlegierungs-Gegenstand nach einem der Ansprüche 1 bis 5 mit einer säulenartigen Mikrostruktur.

8. Einkristall-Superlegierungs-Gasturbinenmaschinen-Laufschaufel, die aufweist:

a. eine Superlegierung auf Nickelbasis nach Anspruch 1,
b. eine Aluminium enthaltende Beschichtung auf dem Substrat, wobei die Beschichtung in der Lage ist, eine haltbare anhaftende Aluminiumoxid-Schicht zu bilden,
c. eine keramische Wärmebarrierebeschichtung, die an der Aluminiumoxid-Schicht haftet.

9. Gasturbinen-Laufschaufel nach Anspruch 8, wobei die Wärmebarrierebeschichtung eine säulenartige Mikrostruktur hat.

10. Gasturbinen-Laufschaufel nach Anspruch 8 oder 9, wobei die Aluminium enthaltende Beschichtung eine Deckschicht-Beschichtung ist.

11. Gasturbinen-Laufschaufel nach Anspruch 8, 9 oder 10, wobei die Aluminium enthaltende Beschichtung ein Aluminid ist.

**Revendications**

1.  Super alliage à base de nickel consistant, en pour cent en poids, en :

    7,5 à 12,5 % de Cr ;
    4,5 à 5,5 % d'Al ;
    jusqu'à 2 % de Ti ;
    3,5 à 4,5 % de W ;
    11,5 à 12,5 % de Ta
    3 à 16 % de Co ;
    0,2 à 0,5 % de Hf ;
    moins de 30 ppm de Y ;
    moins de 500 ppm de Zr ;
    jusqu'à 0,05 % de C ;
    jusqu'à 0,005 % de B ;
    jusqu'à 8,5 % d'éléments supplémentaires choisis dans le groupe consistant en Mo, Re, Nb et V ; et
    le reste de Ni ;
    dans lequel P = -200 Cr + 80 $Mo^2$ - 250 $Ti^2$ - 50 (Ti x Ta) + 15 Cb + 200 W - 14 $W^2$ + 30 Ta - 1,5 $Ta^2$ + 0,5 Co + 1200 Al-100 $Al^2$ + 100 Re + 1000 Hf - 2000 $Hf^2$ + 700 $Hf^3$ - 2000 V - 500 C - 15000 B - 500 Zr, et dans lequel P est inférieur à environ 2 500 ; et
    dans lequel l'alliage a une résistance à l'oxydation supérieure d'au moins environ 25 % à un alliage ayant une composition nominale de 10 % de Cr, 5 % de Co, 4 % de W, 1,5 % de Ti, 5 % d'Al, le reste de Ni lorsqu'il est mis à l'essai dans un essai d'oxydation cyclique par anneau brûleur pendant quatre minutes dans une flamme à 1 150 °C suivie par deux minutes de refroidissement forcé à l'air.

2.  Alliage selon la revendication 1, dans lequel la quantité d'Al + Ti + 0,2 Ta (en % en poids) varie de 7 à 10 %, et la quantité W + 0,8 Ta (en % en poids) varie de 12 à 18 %.

3.  Alliage selon la revendication 1 ou 2, dans lequel P est inférieur à environ 1 800.

4.  Alliage selon l'une quelconque des revendications précédentes, dans lequel les éléments supplémentaires choisis dans le groupe consistant en Mo, Re, Nb et V sont inférieurs à 1.

5.  Super alliage à base de nickel selon la revendication 1 ou 2 consistant, en pour cent en poids, en :

    9 à 11 % de Cr ;
    4,75 à 5,25 % d'Al ;
    1 à 2 % de Ti ;
    3,5 à 4,5 % de W ;
    11,5 à 12,5% de Ta ;
    4 à 6 % de Co ;
    0,25 à 0,45 % de Hf ;
    moins de 30 ppm de Y ;
    moins de 300 ppm de Zr ;
    jusqu'à 0,01 % de C ;
    jusqu'à 0,005 % de B ;
    jusqu'à 8,5 % d'éléments supplémentaires choisis dans le groupe consistant en Mo, Re, Nb et V ; et
    le reste de Ni ;
    dans lequel P = -200 Cr + 80 $Mo^2$ - 250 $Ti^2$ - 50 (Ti x Ta) + 15 Cb + 200 W - 14 $W^2$+30Ta-1,5$Ta^2$+0,5Co+ 1200 Al - 100 $Al^2$ + 100 Re + 1000 Hf - 2000 $Hf^2$ + 700 $Hf^3$ - 2000 V - 500 C - 15000 B - 500 Zr, et dans lequel P est inférieur à environ 2 500 ; et
    dans lequel l'alliage a une résistance à l'oxydation supérieure d'au moins environ 25 % à un alliage ayant une composition nominale de 10 % de Cr, 5 % de Co, 4 % de W, 1,5 % de Ti, 5 % d'Al, le reste de Ni lorsqu'il est mis à l'essai dans un essai d'oxydation cyclique par anneau brûleur pendant quatre minutes dans une flamme à 1 150 °C suivie par deux minutes de refroidissement forcé à l'air.

6.  Article en super alliage selon l'une quelconque des revendications précédentes présentant une microstructure monocristalline.

7. Article en super alliage selon l'une quelconque des revendications 1 à 5 présentant une microstructure colonnaire.

8. Aube de réacteur de turbine à gaz en super alliage monocristallin comprenant :

    a. un super alliage à base de nickel selon la revendication 1,
    b. un revêtement contenant de l'aluminium sur le substrat, le revêtement étant capable de former une calamine d'alumine adhérente durable,
    c. un revêtement de barrière thermique céramique adhérant à ladite calamine d'alumine.

9. Aube de turbine à gaz selon la revendication 8, dans laquelle ledit revêtement de barrière thermique présente une microstructure colonnaire.

10. Aube de turbine à gaz selon la revendication 8 ou 9, dans laquelle le revêtement contenant de l'aluminium est un revêtement par recouvrement.

11. Aube de turbine à gaz selon la revendication 8, 9 ou 10, dans laquelle le revêtement contenant de l'aluminium est un aluminure.

FIG. 1

FIG. 2

FIG. 3

EP 1 586 669 B1

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4209348 A
- US 4459160 A
- US 4643782 A
- EP 1201778 A
- US 4719080 A
- US 4585481 A
- US 4321311 A
- US 5262245 A